# EUROPEAN PATENT SPECIFICATION

(11) **EP 1 070 436 B1**
(45) Date of publication and mention of the grant of the patent: **25.06.2008**
(21) Application number: 99917386.7
(22) Date of filing: 09.04.1999
(51) Int. Cl.: H04Q 11/04, H04L 29/06, H04L 12/56, H04L 12/64

(54) **METHOD AND APPARATUS FOR PROVIDING GUARANTEED QUALITY OF SERVICE IN A LOCAL OR WIDE AREA NETWORK**
VERFAHREN UND VORRICHTUNG ZUR BEREITSTELLUNG EINER GEWÄHRLEISTETEN DIENSTQUALITÄT IN EINEM LOKALEN ODER WEITRÄUMIGEN NETZ
PROCEDE ET APPAREIL PERMETTANT D'ASSURER UNE QUALITE DE SERVICE DANS UN RESEAU LOCAL OU ELARGI

(30) Priority: 14.04.1998 US 60520
(43) Date of publication of application: 24.01.2001
(60) Divisional application: 08155546.8
(73) Proprietor: Corps of Discovery Patent Holding LLC, Bellevue, WA 98005 (US)
(72) Inventor: GOLDEN, Michael, E., Pleasanton, CA 94588 (US); RUNDQUIST, William, A., Fremont, CA 94536 (US); SHULMAN, Kenneth, A., Linvingston, NJ 07039 (US)
(74) Representative: Flint, Adam
(86) International application number: PCT/US1999/007818
(87) International publication number: WO 1999/053719

(56) References cited:
- TEAGARDEN E: "PRIORITIZATION: THE BEST NETWORKING POLICY" DATA COMMUNICATIONS, vol. 23, no. 2, 21 January 1994 (1994-01-21), pages 59-61, XP000418330 ISSN: 0363-6399
- MOHAMMAD PEYRAVIAN: "PROVIDING DIFFERENT LEVELS OF NETWORK AVAILABILITY IN HIGH-SPEED NETWPRKS" PROCEEDINGS OF THE GLOBAL TELECOMMUNICATIONS CONFERENCE (GLOBECOM), SAN FRANCISCO, NOV. 28 - DEC. 2, 1994, vol. 2, 28 November 1994 (1994-11-28), pages 941-945, XP000488676 INSTITUTE OF ELECTRICAL AND ELECTRONICS ENGINEERSISBN: 0-7803-1821-8
- SRIRAM K: "METHODOLOGIES FOR BANDWIDTH ALLOCATION, TRANSMISSION SCHEDULING, AND CONGESTION AVOIDANCE IN BROADBAND ATM NETWORKS" COMPUTER NETWORKS AND ISDN SYSTEMS, vol. 26, no. 1, 1 September 1993 (1993-09-01), pages 43-59, XP000390600 ISSN: 0169-7552
- MEHRA A ET AL: "STRUCTURING COMMUNICATION SOFTWARE FOR QUALITY-OF-SERVICE GUARANTEES" IEEE TRANSACTIONS ON SOFTWARE ENGINEERING, vol. 23, no. 10, 1 October 1997 (1997-10-01), pages 616-634, XP000728457 ISSN: 0098-5589
- CIDON I ET AL: "CONNECTION ESTABLISHMENT IN HIGH-SPEED NETWORK" IEEE / ACM TRANSACTIONS ON NETWORKING, vol. 1, no. 4, 1 August 1993 (1993-08-01), pages 469-481, XP000415370 ISSN: 1063-6692

## Description

The present invention relates to a method and apparatus for establishing a reserved connection having a required bandwidth between first and second endstations in a network.

The present invention relates generally to a method and apparatus for providing guaranteed quality of service (QoS) in a local or wide area network, and more particularly, to a technique for adapting an existing packet-switched infrastructure so that on-demand reserved-bandwidth virtual circuit connections with guaranteed QoS between any endstations in the network can be established.

Certain standard and proposed standards are known collectively in the art as H.323 "umbrella'' standards. These standards propose methods for managing multimedia "connections" between end-points and through network elements on IP networks. These standards define a method for managing certain classes of switched connections of varying bandwidth and levels of quality-of-service across IP networks. However, H.323 does not of itself define or provide any mechanism that will cause existing switches within a packet-switched Ethernet network to be able to provide reserved-bandwidth switched virtual circuits without hardware modification of those switches.

Several conventional approaches attempt to achieve reserved-bandwidth virtual circuits across packet-switched networks. However, these approaches have notorious disadvantages. For example. Asynchronous Transfer Mode (ATM) switching has been proposed as a means of providing such reserved-bandwidth virtual circuits. However, ATM is not compatible with conventional Ethernet infrastructures, and so adapting an existing Ethernet network for ATM requires significant capital expense in deploying an entirely new switching infrastructure.

Meanwhile, simple protocol-based approaches have been suggested in the art such as resource reservation protocol (RSVP). However, such approaches require massive standards acceptance throughout the industry before large scale services can be deployed. Moreover, RSVP does not provide centralized mechanisms for accounting for and managing bandwidth utilization. Further. RSVP can not guarantee that the bandwidth requested will be maintained from end-to-end on virtual circuit connections established through multiple switches. For details regarding RSVP, see generally, R. Braden et al., RFC 2205, Network Working Group, September 1997.

What is needed in the art, therefore, is an overall solution to the above-mentioned problems. The present invention fulfills this need.

Teagarden E: "Prioritization: The Best Networking Policy"; Data Communications, vol. 23, no. 2; 21 January 1994; pages 59 to 61; XP000418330 ISSN: 0363-6399 discloses a router that prioritises traffic in a packet switched network by identifying the protocols of each packet and varying the amount of bandwidth allocated to each protocol.

Mohammad Peyravian: "Providing Different Levels of Network Availability in HighSpeed Networks"; Proceedings of the Global Telecommunications Conference (Globecom), San Francisco, Nov. 28 to Dec. 2 1994; Vol. 2, 28 November 1994, pages 941 to 945, XP000488676 Institute of Electrical And Electronics Engineers ISBN: 0-7803-1821-8 discloses a control protocol for decentralised connection-orientated networks, where the originating source sends a call set-up request for the call to all of the link managers along the route of the call. The link managers accept or reject the call based on available resources.

Sriran K: "Methodologies for Bandwidth Allocation, Transmission Scheduling and Congestion Avoidance in Broadband ATM Networks"; Computer Networks and ISDN Systems, vol. 26, no.1; 1st September 1993, pages 43 to 59, XP000390600 ISSN: 0169-7552 discloses ATM cell-multiplexing using a Dynamic Time-Slice scheme which guarantees a required bandwidth for different bandwidths or virtual circuits.

According to a first aspect of the present invention, there is provided an apparatus for establishing a reserved connection having a required bandwidth between first and second endstations in a network, said apparatus comprising: an enterprise control point constructed and arranged to identify a path between said first and second endstations, said path including at least one switch having a first port in packet communication with said first endstation and a second port in packet communication with said second endstation; characterised in that: the enterprise control point is a centralized enterprise control point and includes (i) a network elements registry constructed and arranged to list bandwidth capacities of elements within said network including said first and second endstations, said at least one switch, and said first and second ports; and, (ii) a connection controller constructed and arranged to determine a capacity of said path in accordance with said network elements registry, and to refuse to establish said reserved connection if said capacity is less than said required bandwidth, wherein the enterprise control point is constructed and arranged to cause said at least one switch to forward packets belonging to said reserved connection between said first and second ports along said path with higher priority than packets not belonging to said reserved connection.

According to a second aspect of the present invention, there is provided a method for establishing a reserved connection having a required bandwidth between first and second endstations in a network, said method comprising: identifying a path between said first and second endstations, said path including at least one switch having a first port in packet communication with said first endstation and a second port in packet communication with said second endstation; characterised by: a centralized enterprise control point determining a capacity of said path in accordance with a network elements registry that lists bandwidth capacities of elements within said network including said first and second endstations, said switch, and said first and second ports; refusing said reserved connection if said capacity is less than said required bandwidth; and, causing said at least one switch to forward packets belonging to said reserved connection between said first and second ports along said path with higher priority than packets not belonging to said reserved connection.

Preferred embodiments of the present invention provide a means for converting existing packet-switched networks into networks that can simultaneously support both conventional packet-switched services and virtual circuit switching services with reserved bandwidth and QoS; a means for converting existing packet-switched networks into networks that can simultaneously support both conventional packet-switched services and virtual circuit switching services solely through firmware modifications of existing switches in the networks; a means for linking multiple switches into a virtual circuit switched network that is capable of working compatibly with, but does not require, H.323 standards for creating end-to-end switched virtual circuit connections; a means for linking multiple switches into a virtual circuit switched network that is capable of managing guaranteed bandwidth and QoS switched circuit connections for all classes of IP traffic (e.g. UPD, TCP, FTP, http, etc.) with or without H.323 protocols or devices being involved; a means for linking multiple switches into a virtual circuit switched network that is capable of providing gatekeeper and gateway functions for interoperating and interconnecting with other physical or virtual circuit switched networks (for all classes of IP traffic) with or without reserved bandwidth; a means for linking multiple switches into a virtual circuit switched network that is capable of providing real-time routing services of broadband circuit requests based on available bandwidth and bandwidth priorities in specific switches that are part of a larger network; and, a means for linking multiple switches into a virtual circuit switched network that is capable of providing billing, policy, settlements, security, provisioning, failure and performance management control and data, etc.

According to one preferred embodiment of the present invention, existing packet-switched LAN infrastructures (e.g. packet-switched Ethernet) are adapted so as to be able to provide reserved-bandwidth virtual-circuit switching services in addition to their conventional capabilities. A centralized control point is incorporated within the infrastructure, preferably via a firmware upgrade to an existing enterprise-class switch, that maintains a map of paths between endstations in the network, as well as the bandwidth capabilities of all links and switches along the paths. When a virtual circuit connection between endstations is requested, the centralized control point determines whether the requested bandwidth is available all along the path. If so, the resources along the path are reserved for the connection. Functional capabilities within existing switches in the LAIN infrastructure are upgraded (preferably via firmware modifications) to be responsive to such reservation requests from the centralized control point and to thereafter give priority to packets belonging to the connection, thereby providing the desired QoS for that connection.

The preferred embodiment of the present invention thus solves longstanding problems encountered with other conventional approaches to providing "clear channel" non-contending virtual circuit connections of arbitrary bandwidth (often described as guaranteed quality-of service (QoS) i.e. guaranteed bit rate). Importantly, by using existing packet-switched Ethernet and/or Internet Protocol (IP) based local and/or wide area and network technologies, massive change-out of existing LAN or WAN switching or transport infrastructures is not required.

These and other objects and advantages of the present invention will become apparent to those skilled in the art after considering the following detailed specification, together with the accompanying drawings wherein:
Figure 1 illustrates an example of a typical LAN infrastructure adapted for virtual circuit QoS services in accordance with an embodiment of the present invention;
Figure 2 illustrates an example of a signaling network in a typical LAN infrastructure adapted in accordance with an embodiment of the present invention;
Figure 3 is a functional block diagram of an Enterprise Control Point in a LAN infrastructure such as that illustrated in Figure 1;
Figure 4 is a functional block diagram of a switch adapted for use in an upgraded LAN infrastructure such as that illustrated in Figure 1;
Figure 5 is a functional block diagram of another embodiment of a switch adapted for use in an upgraded LAN infrastructure such as that illustrated in Figure 1;
Figure 6 is a functional block diagram of an endstation adapted for use in an upgraded LAN infrastructure such as that illustrated in Figure 1;
Figure 7 illustrates an example of an implementation of a LAN infrastructure adapted for virtual circuit connections in accordance with an embodiment of the present invention;
Figure 8 is a functional block diagram of an endstation adapted for use in an upgraded LAN infrastructure such as that illustrated in Figure 7; and,
Figure 9 illustrates several possible interoperations of a LAN adapted in accordance with an embodiment of the present invention with other networks and infrastructures.

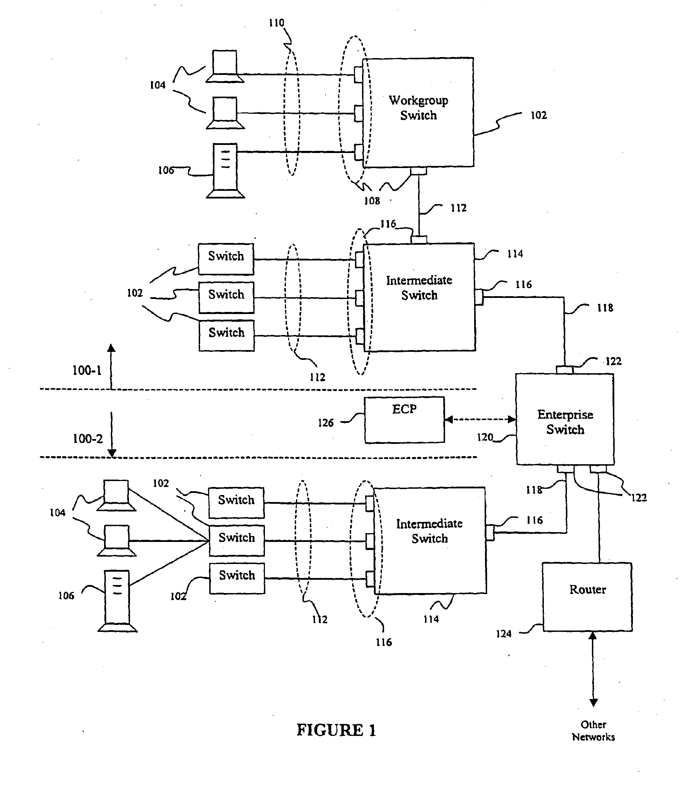

Figure 1 illustrates a typical LAN adapted for providing guaranteed QoS in accordance with the principles of the invention. Although the invention will be primarily described below with reference to a LAN infrastructure using Ethernet-based packet-switching protocols, it will be understood by those skilled in the art that the principles of the invention are easily extended to WAN infrastructures using Ethernet and/or IP-based packet switching protocols.

As shown in Figure 1, the typical LAN includes a first campus 100-1 and a second campus 100-2. Each campus 100 has a plurality of end stations connected together with links and switches. More particularly, each campus 100 includes at least one workgroup switch 102 to which are connected endstations such as workstations 104 and servers 106 via ports 108 and links 110. Workgroup switch 102 is preferably a flash memory upgradable switch such as a workgroup level Catalyst LAN switch from Cisco Corp. of San Jose, CA. Workstations 104 and servers 106 are standalone processing units having Ethernet network interface cards (NICs) such as Fast EtherLink XL or EtherLink XL NICs from 3 Com Corp. of Santa Clara, CA, for example. Links 110 are, for example, 10 Mbps Ethernet links carried over Category 3 compliant unshielded twisted-pair (UTP) cabling. Links 110 can also be fast Ethernet or Gigabit Ethernet links, depending on bandwidth needs, particularly for endstations such as servers 106.

Multiple workgroup switches 102 are connected via links 112 to intermediate switch 114 having ports 116. Intermediate switch 114 is also preferably a flash memory upgradable siwtch such as an intermediate level Catalyst LAN switch from Cisco Corp., for example.

Intermediate switches 114 are connected via uplinks 118 to enterprise switch 120, which links the campuses together. Enterprise switch 120 is an enterprise-class switch, such as enterprise level Catalyst LAN switch from Cisco Corp, for example. Enterprise switch 120 includes ports 122, one or more of which may be connected to a router 124 that connects the LAN to other networks, the Internet, etc.

The number and type of switches and campuses deployed in a given LAN depends on the number of endstations and their physical separation. Accordingly, it should be apparent that there may be only one campus and no intermediate switches or enterprise switches at all, or there may be multiple campuses and multiple intermediate switches per campus in a given LAN. The principles of the invention to apply to all of these possible configurations of existing packet-switched Ethernet-based LAN infrastructures.

Further connected to enterprise switch 120 is a centralized Enterprise Control Point (ECP) 126. Although shown separately for clarity, ECP 126 may be an operable part of enterprise switch 120. That is, ECP 126 may be a standalone processor and software that communicates with enterprise switch 120 (or, alternatively, any one of workgroup switches 102 and intermediate switches 114) as any other endstation in the LAN, or it may be incorporated into the existing functionality of enterprise switch 120 (or, alternatively, any one of workgroup switches 102 and intermediate switches 114) by a firmware upgrade, for example. Importantly, ECP 126 provides additional functionality not found in conventional packet-switched environments, which additional functionality is an aspect of the present invention that will be explained in more detail below.

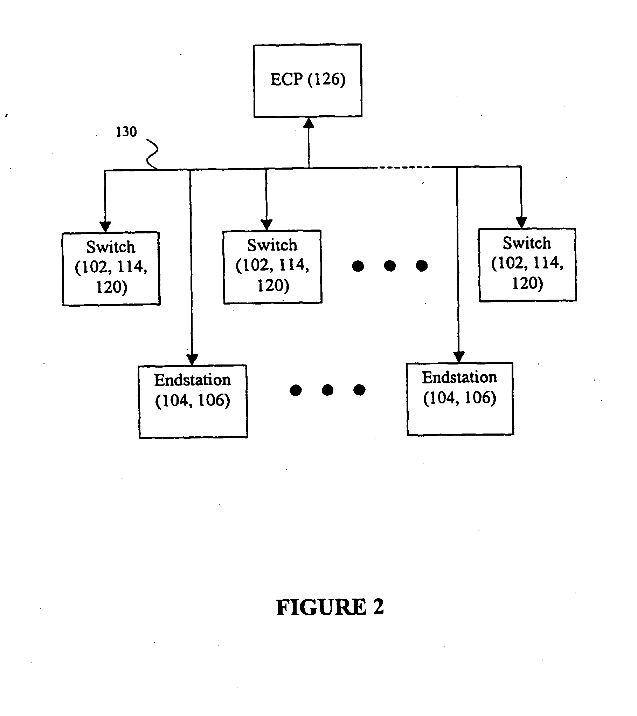

As shown in Figure 2, ECP 126 communicates individually with as many switches and endstations in the LAN as have been upgraded to support the additional functionality of the present invention. For example, upgraded ones of switches 102, 114, 120 receive bandwidth reservation requests from ECP 126 and reply to ECP 126 with acknowledgments of such requests. Likewise, upgraded ones of endstations 104, 106 send connect and disconnect requests to ECP 126, which responds with acknowledgments including grants or denials of such requests.

Communication between the upgraded network elements and ECP 126 is preferably performed via a reserved signaling channel 130. ECP 126 and each upgraded switch and endstation are programmed to send and recognize certain types of packets as special signaling packets. Such packets contain, in addition to the MAC level addresses of the communicating parties, a special predetermined identifier that can be used only by ECP 126, upgraded switches and endstations when sending signaling packets. This predetermined identifier can be a multicast address within the reserved "router" multicast group, or some kind of datagram protocol, for example. By programming each upgraded element to send and be responsive to packets having this predetermined identifier, signaling traffic can always be distinguished from other LAN traffic by the upgraded elements, thereby reserving a critical pathway through the network for signaling between them.

It should be noted that signaling channel communications regarding the guaranteed bandwidth and QoS services of the present invention could be compatible with H.323 defined standards. However, such standards need not be employed. Moreover, the present invention can extend such guaranteed bandwidth and QoS services to all classes of traffic that can be carried across the packet-switched Ethernet LAN, whether or not H.323 protocols or devices are involved.

It should be further noted that the guaranteed bandwidth and QoS services of the present invention can be extended to selected ones of, or all, endstations in a packet-switched LAN. That is, the additional functionality can be extended to as many endstations as desired, by providing an ECP and firmware upgrades or replacement switches for as many of the existing switches of the LAN as desired. Not all the switches need be upgraded, with the result, however, that the guaranteed bandwidth and QoS services of the present invention will not be extended to endstations connected to those switches. Likewise, not all endstations connected to upgraded switches need be upgraded.

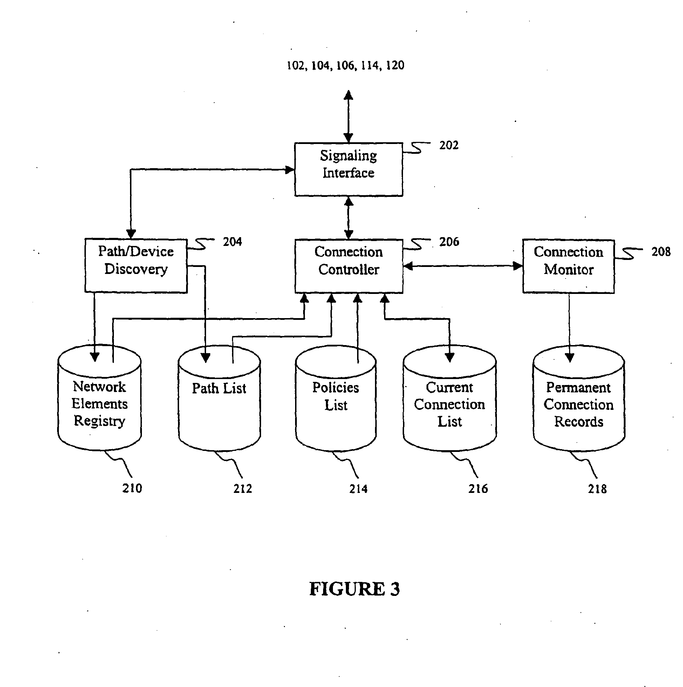

Figure 3 further illustrates the functionality provided by ECP 126. As shown, ECP 126 includes a signaling interface function 202, a path/device discovery function 204, a connection controller function 206, and a connection monitor function 208.

Signaling interface function 202 provides the ability to communicate with switches 102, 114, 120 and endstations 104, 106 via the reserved signaling channel. Signaling interface function 202 monitors for signaling packets received from switches 102, 114, 120 and endstations 104, 106 and forwards them to the appropriate function within ECP 126. Signaling interface function 202 also handles sending signaling packets to switches 102, 114, 120 and endstations 104, 106 in accordance with commands by functions within ECP 126.

Path/device discovery function 204 learns what network elements and paths exist within the LAN and maintains lists of them in network elements registry 210 and path list 212. The network elements include endstations and switches and the interfaces between them (e.g. switch ports). Information maintained by path/device discovery function 204 for each network element includes their respective MAC addresses and bandwidth capacity. Path/device discovery function 204 also maintains a list of all possible paths between each of the endstations in the LAN. The paths include each switch and each port thereof through which data packets between the endstations must pass. The list of possible paths is preferably ordered from paths having the least number of hops to those having the most. In some cases, of course, such as with endstations connected to the same switch, there will only be one possible path between the endstations.

Path/device discovery function 204 can fill in the information in network elements registry 210 and path list 212 as follows. When ECP 126 is initialized, it broadcasts a signaling message requesting all upgraded switches and endstations to identify themselves (e.g. return a reply message including their MAC address). For each identified switch and endstation, ECP 126 then queries them individually to learn their configuration and/or bandwidth capacities, thus completing the information in network elements registry 210. The bandwidth capacities includes the overall bandwidth capacity of the switch or endstation, the bandwidth capacity of each switch port, and the bandwidth capacity of links between switches and/or endstations.

Path/device discovery function 204 then fills in the information in path list 212 by asking each switch to return their individual cached maps. From this information, path/device discovery function can build paths between each upgraded endstation in the LAN that is connected via a completely upgraded path in the network to another upgraded endstation.

Thereafter, path/device discovery function 204 maintains the information in network elements registry 210 and path list 212 by periodically sending queries to each identified switch and endstation. Moreover, when a new or upgraded switch or endstation is added to the network, that element can register with path/device discovery function 204.

A number of alternatives to the path/device discovery function 204 as implemented above should be noted. For example, the function can be performed by an offline process, or may be manually performed by a system administrator, with results of such offline or manual processing being stored in network elements registry 210 and path list 212. Moreover, only one path between each endstation need be stored. As a further alternative, the path can be determined at the time a request for a connection between endstations is received.

Connection controller function 206 is responsive to requests for virtual circuit connections and disconnections from endstations 104. 106 received via signaling interface function 202. In response, it causes signaling interface function 202 to send acknowledgements including grants or denials of such requests to endstations 104. 106. and issues commands to set up or tear down a bandwidth reservation to switches 102, 114, 120.

More specifically, a request for a virtual circuit connection includes the endstation making the request (e.g. its MAC address), the endstation to which a reserved connection is requested (e.g. its MAC address), and the bandwidth and/or quality of service requested. ECP 126 may include functionality for resolving logical endstation identifiers with their corresponding physical addresses within the network.

When such a request for a virtual circuit connection is received, connection controller function 206 looks up the list of available paths between the endstations of the requested connection in path list 212. It then determines the overall capacity of the path by determining whether the minimum bandwidth available through each link, switch, switch port and endstation in the path, as stored in network elements registry 210, will be sufficient to fulfill the bandwidth and/or quality of service requested for the connection. Connection controller function 206 reduces the bandwidth available through each link, switch, switch port and endstation in the path, and thus the overall capacity of the path, in accordance with bandwidth consumed by currently existing connections in connections list 216, which list is maintained by connection controller function 206 as connections are established and torn down.

The bandwidth available through each link, switch, switch port and endstation may be further reduced by rules established in policies list 214. Such rules may include preserving a certain amount of bandwidth in a link for normal network traffic, allowing certain endstations to have priority for reserved bandwidth connections over other endstations, and the like. Such rules may even be adjusted dynamically by time-of-day, etc. Policies list 214 is preferably established in advance when ECP 126 is initialized, by a system administrator for example.

If the overall capacity of the entire path is not sufficient for the bandwidth required by the requested connection, the next path in the list is checked, and on to the end of the list. If no path that can fulfill the request exists, the request is denied and a message to that effect is sent to the requesting endstation.

If an available path can provide the requested bandwidth for the connection, connection controller function 206 "rings" the requested other endstation of the connection and waits for an answer. If the endstation agrees to the connection, connection controller proceeds to establish the connection. Specifically, for the best available path that can fulfill the requested connection, connection controller function 206 sends a bandwidth reservation to each switch 102, 114, 120 in the path. The reservation includes the source and destination of the connection (e.g., the source and destination MAC addresses of the endstations), and the desired bandwidth in packets per second, for example. Connection controller function 206 then waits for an acknowledgment from each switch 102, 114, 120 to which a reservation request was sent. When all such acknowledgments are received via signaling interface function 202, connection controller function 206 issues a connection granted message to the endstations involved in the requested connection, and updates the list of existing connections in connections list 216. If a predetermined time elapses before all acknowledgments are received, connection controller function issues a connection refused message to the requesting endstation, and bandwidth release messages to each switch 102, 114, 120 to which a reservation request was sent.

When a disconnection request is received via signaling interface 202, connection controller 206 finds the connection in connections list 216, updates the list, and sends bandwidth release messages to each switch 102, 114, 120 involved in the connection, as well as a disconnection notice to the other party in the connection.

Connection monitor 208 maintains a permanent list of connections in connection records 218. Simultaneously with updating connections list 216, connection controller 206 notifies connection monitor 208 with the endstations and network elements involved in the connection and the bandwidth reserved for the connection. Based on this information, connection monitor 208 creates records that show the elapsed time of the connection, the parties involved, and the resources used. Such records can be used for billing and resource management, for example.

It should be further noted that for clarity, the above discussion has assumed only two endstation participants in a reserved virtual circuit connection. However, it should be apparent to those skilled in the art that the principles of the invention are applicable to reserved virtual circuit connections for three or more endstation participants.

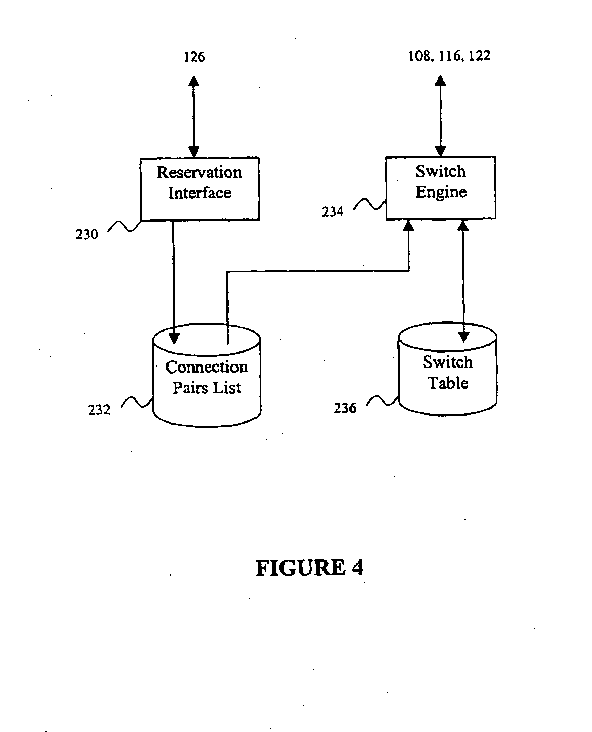

Figure 4 further illustrates the additional functionality provided in a switch 102, 114, 120 that has been upgraded in accordance with the principles of the invention. As shown, this includes reservation interface function 230 and connection pairs list 232, in addition to enhanced existing functionality provided by switch engine 234 and switch table 236.

Conventional switches include switch engine functions for forwarding packets according to conventional techniques. Such conventional techniques include maintaining a table that correlates addresses (typically MAC addresses) of endstations connected thereto with the ports by which they are connected. When a packet is received at a port of the switch, the conventional switch engine "cuts into" the packet to obtain the destination address in the packet header forwards the packet to the corresponding port for that address stored in the table. Conventional switches may also include functionality for updating the table when a packet from an unknown endstation is received, and broadcasting or forwarding up a packet with an unknown destination endstation.

Such conventional techniques must be enhanced for the switch to implement the virtual circuit services of the present invention. Accordingly, switch 102, 114, 120 includes an enhanced switch engine 234 that makes forwarding decisions based on the conventional switch table 236 as well as a new connection pairs list 232. Moreover, switch 102, 114, 120 includes additional functionality in the form of reservation interface function 230. The effect of the enhanced functionality is that switch 102, 114, 120 gives higher priority to packets belonging to reserved virtual circuit connections than to other packets contending for access to the same ports as needed by the reserved virtual circuit connections, thereby guaranteeing the desired quality of service for the connections.

Reservation interface function 230 receives bandwidth reservation requests from ECP 126 via the reserved signaling channel 130. Such requests include, for example, the MAC addresses of the endstations involved in the virtual circuit connection, as well as the desired bandwidth, in packets per second for example. Upon receipt of such a request, reservation interface function 230 stores the addresses and desired bandwidth in connection pairs list 232 and sends an acknowledgment to ECP 126. Reservation interface function 230 also receives bandwidth reservation release requests from ECP 126 containing, for example, the MAC addresses of the endstations involved in the virtual circuit connection that is to be released. Upon receipt of such a request, reservation interface function 230 deletes the information in connection pairs list 232 corresponding to the released connection and sends an acknowledgment to ECP 126.

Enhanced switch engine 234 performs its conventional functions of forwarding packets between ports of the switch in accordance with addresses in the packet headers and the contents of switch table 236. In accordance with the principles of the invention, however, enhanced switch engine 234 further compares the addresses in the packet headers with the addresses contained in the reserved connection pairs list 232. Specifically, if the source and destination addresses of an incoming packet match both addresses of one of the address pairs stored in connection pairs list 232, the packet is forwarded to the port associated with the destination address, which port is designated by switch table 236. Meanwhile, if the port designated by switch table 236 for one address of an incoming packet matches a port designated by switch table 236 for any of the stored addresses of endstations involved in a reserved virtual circuit connection, but if both addresses of the incoming packet do not match the corresponding address pair stored in connection pairs list 232, the packet is dropped (unless it is a signaling packet).

As an alternative, if the switch maintains separate port queues for priority traffic, enhanced switch engine 234 can forward reserved connection packets to high priority queues, while dropping or forwarding to lower priority queues those packets which contend for access to ports involved in reserved connections.

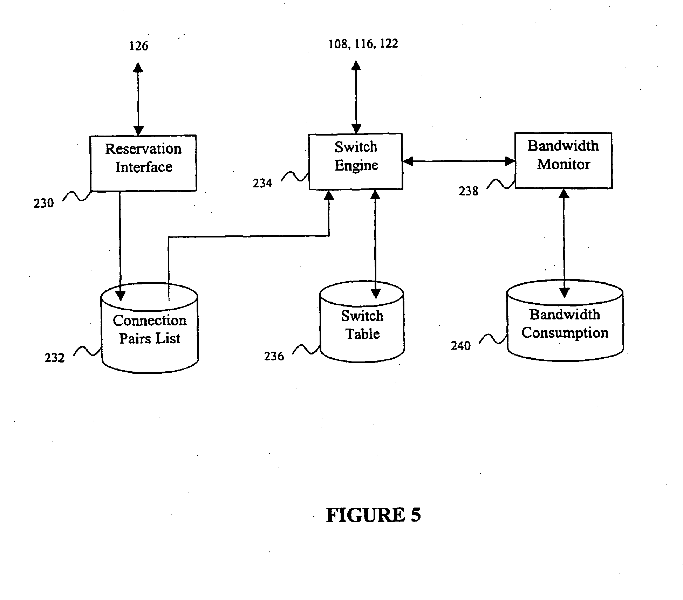

Figure 5 illustrates another embodiment of the additional functionality provided in a switch 102, 114, 120 upgraded in accordance with the principles of the invention. In this example, the upgraded switch further includes bandwidth monitor function 238 and bandwidth consumption table 240.

In this example, rather than immediately dropping packets that are contending for access to the same port reserved for access by packets belonging to an established virtual connection, additional processing is performed. Each time a packet belonging to an established virtual connection is forwarded to the appropriate port, enhanced switch engine 234 notifies bandwidth monitor function 238, which updates the actual bandwidth consumed by that connection, for example, by maintaining a count of packets forwarded in a predetermined time interval.

Bandwidth monitor function 238 also knows or has means of determining the total bandwidth capacity of each port (and/or its associated link) of the switch. When an incoming packet vies for access to a port reserved for an established virtual connection, switch engine 234 notifies bandwidth monitor function 238, which determines whether the port (and/or its associated link) has any excess bandwidth available (e.g. whether the actual bandwidth consumed by that connection is less than the total bandwidth capacity of that port and/or link by a predetermined margin). Bandwidth monitor function 238 sends the answer back to switch engine 234, which either drops or forwards the packet accordingly. Bandwidth monitor function 238 thus allows normal traffic to continue along the same path with virtual circuit connections as long as it doesn't reduce the QoS desired for the virtual circuit connection.

Moreover, bandwidth monitor function 238 could monitor the actual bandwidth consumed by each reserved virtual circuit connection versus their reserved bandwidth. If the actual bandwidth of a virtual circuit connection exceeds the bandwidth reserved, bandwidth monitor function 238 could notify enhanced switch engine 234, which could either drop further packets for that connection, or send a message via signaling channel 130 notifying ECP 126 that the reserved bandwidth is being exceeded. ECP 126 could then instruct the offending endstation(s) to throttle back on packet throughput. Likewise, bandwidth monitor function 238 could detect a condition where the reserved and/or actual bandwidth for a given connection could be increased, and cause a message to be sent to ECP 126 to that effect. If the excess capacity condition exists throughout the path, ECP 126 could instruct the participants in that connection that they can increase their throughput.

It should be noted that virtual circuit connections can be reserved based not only on the MAC addresses of the participating endstations, but also on layer 3 addresses such as IP addresses, or even protocols, thus permitting the adapted switches in the network to discriminate between network traffic attributable to different processes on the same machine. Such additional discrimination functionality would require additional processing capacity which may not be available on lower-level switches, however.

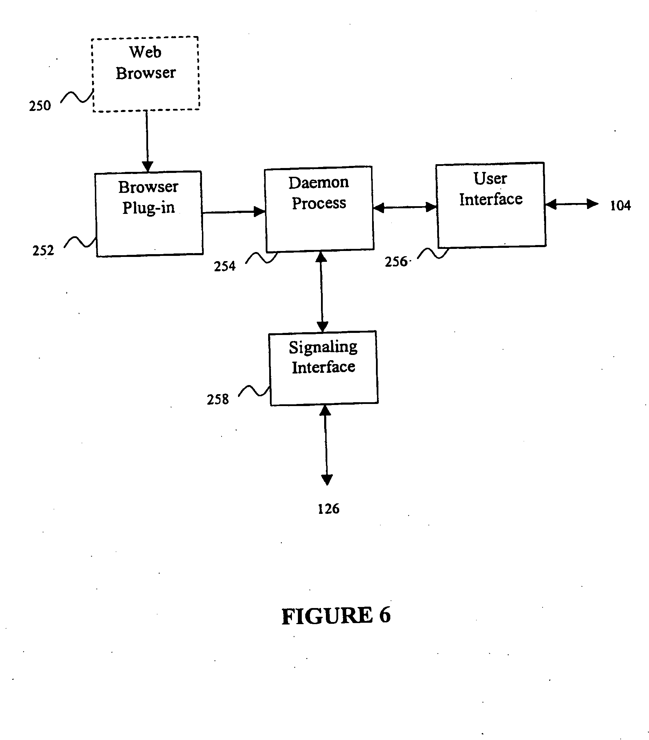

Figure 6 further illustrates one example of the software load on a workstation 104 adapted for the virtual circuit services according to the present invention. As shown, it includes a web browser 250, a browser plug-in application 252, a daemon process 254, a user interface process 256, and a signaling interface process 258. The above processes are operable within a common operating system such as Windows 95 from Microsoft Corp. of Redmond, WA, for example.

Web browser 250 is preferably a Java-capable browser such as NetScape Communicator 4.0 from NetScape Communications Corp. of Mountain View, CA, for example. Daemon process 254 provides the functionality needed to take advantage of the virtual circuit services according to the present invention, and is preferably instantiated on workstation 104 when it is powered on. User interface process 256 is responsible for responding to user inputs from I/O devices attached to workstation 104 (e.g. keyboard and mouse), and for drawing objects on a video display associated with the workstation. To enable browser 250 to handle URLs unique to the virtual circuit services of the present invention, browser 250 is configured with plug-in application 252, whose main function is to notify daemon process 254 when a virtual circuit connection is being requested from the browser. Signaling interface process 258 receives requests for participation in, or termination of, a virtual circuit connection from ECP 126 via signaling channel 130 and the workstation's NIC and forwards them to daemon process 254 upon receipt, and also sends requests for origination or termination of virtual circuit connections to ECP 126 upon command from daemon process 254.

Details regarding creating processes under a common operating system such as Windows 95 and configuring browser plug-in applications responsive to specific URLs are believed to be well understood in the art, and so such details will not be presented here so as not to obscure the invention.

When workstation 104 is powered on, daemon process 254 is instantiated and starts up signaling interface process 258. Daemon process 254 then waits for messages from either the browser 250 (via browser plug-in application 252), requesting that a virtual connection be initiated or terminated, or from signaling interface process 258, indicating that another endstation is requesting that workstation 104 participate in, or wishes to terminate a virtual circuit connection.

For example, when a user is running browser 250 and desires to originate a virtual circuit connection, a web page that contains a directory of network users is accessed and the directory is displayed in the browser window. The directory contains a list of network users, whose names are preferably shown as hypertext with links having URLs that are unique to the virtual circuit services of the present invention. When the user selects a party or parties from the list, browser 250 invokes plug-in application 252 to handle the request, and plug-in application 252 in turn notifies daemon process 254. Daemon process 254 invokes user interface process 256, which draws a dialog box asking the user to specify what kind of connection is desired (e.g., audio only, data only, teleconference, etc.). This information is returned to daemon process 254 and formatted into a connection request that is forwarded to signaling interface 258, which sends the request to ECP 126.

If the connection can not be established (e.g., not enough bandwidth available, or the other participant does not agree to the connection), ECP 126 notifies workstation 104 to that effect via signaling channel 130, which message is received by signaling interface process 258. Signaling interface process 258 forwards the message to daemon process 254, which in turn commands user interface process 256 to paint a message on the workstation display informing the user that the requested connection was refused.

If the connection can be established, ECP 126 notifies workstation 104 to that effect via signaling channel 130, which message is received by signaling interface process 258. Signaling interface process 258 forwards the message to daemon process 254, which in turn commands user interface process 256 to paint a message on the workstation display informing the user that the requested connection was granted. Additional functionality can also be built in to launch an application desired for that connection (such as a video or audio conference). User interface process 258 can also paint an action box on the screen that permits the user to terminate the connection when desired. When such an action is desired by the user, the answer is collected by user interface process 256 via user I/O devices and relayed to the daemon process 254. Daemon process 254 then formats an answer message which is sent to ECP 126 via signaling interface process 258 and signaling channel 130.

Meanwhile, for connection requests sent to workstation 104 from another network cndstation, these are received by daemon process 254 via signaling interface process 258. When such requests are received, daemon process 254 activates user interface process 256, which in turn paints a dialog box on the workstation's video display, querying the user whether to participate in the connection. The answer is collected by user interface process 256 via user I/O devices and relayed to the daemon process 254. Daemon process 254 then formats an answer message which is sent to ECP 126 via signaling interface process 258. Similar processing is performed for connection termination requests from other endstations.

Although the process of requesting a virtual circuit connection has been described above with reference to the example of a user interface process interacting with a user to select a type of connection, it should be apparent that many alternatives are possible. For example, additional layers of software can be built into applications that automatically request a connection, determine the type of connection to be made, and how much bandwidth and what quality of service to request for such connection.

Furthermore, the process of responding to requests for connections can be entirely automatic, as could be the case in an endstation such as server 106. That is, no user interaction need be required to respond to requests from network users to log onto or access information from server 106. Accordingly, the software load on such endstations could be limited to a daemon process such as 254 and a signaling interface process such as 258.

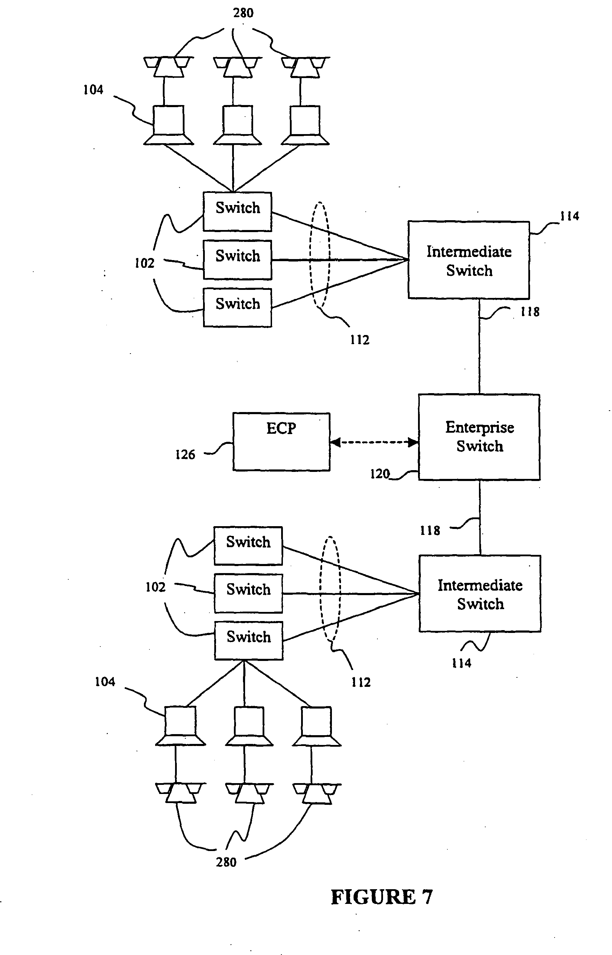

One possible implementation of an existing network adapted in accordance with the principles of the invention will now be described with reference to Figure 7. In the adapted network as shown, endstations such as workstations 104 are connected to workgroup switches 102 by existing cabling. Several workgroup switches 102 are connected to intermediate switches 114 by links 112, and intermediate switches 114 are connected to enterprise switch 120 by links 118.

In this implementation, ECP 126 provides functionality akin to a private branch exchange (PBX) in a local office ISDN. As further shown in Figure 7, one or more workstations 104 are configured with telephones 280. To support this configuration, workstations 104 must include a NIC that has a telephone interface. A virtue of this implementation is that it adds local office telephony within an existing LAN infrastructure without requiring additional cabling or a costly PBX or central office exchange service (Centrex).

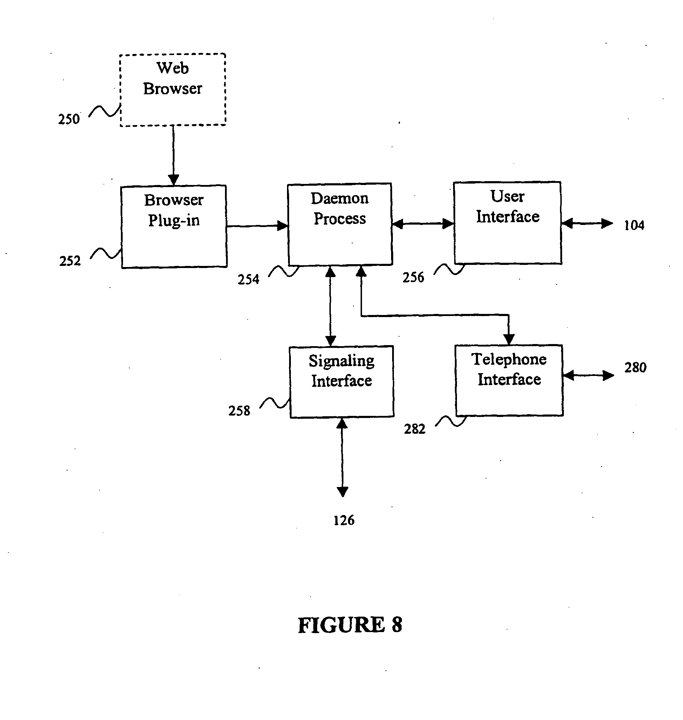

As shown in Figure 8, to support telephony applications, workstations 104 further include, in addition to the enhanced functionality discussed with reference to Figure 6, a telephone interface process 282. Telephone interface function 282 monitors when a user enters a number to dial, and alerts daemon process 254 when a number is dialed. In response, daemon process 254 formats a message to send to ECP 126 via signaling interface process 258 and signaling channel 130. Such a message may be in accordance with standard dialing protocols such as Q.931, for example. Telephone interface 282 also performs, in response to commands from daemon process 254 according to messages received from ECP 126, such standard telephone functions as ring and busy signals.

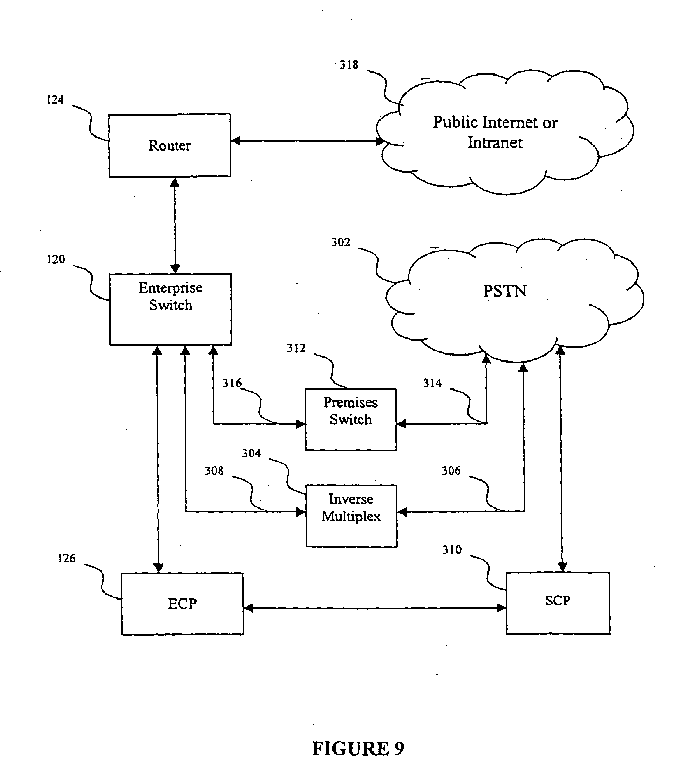

Several possible interoperations of an existing network adapted in accordance with the principles of the invention with other types of networks and infrastructures will now be described with reference to Figure 9.

As shown in Figure 9, one possible interoperation is to provide access to connections in a public switched telephone network (PSTN) 302, for example, ISDN. This extends the virtual circuit connections from upgraded endstations within the LAN to wide area endpoints accessible to PSTN 302. There are several alternative ways to do this.

As a first alternative, inverse multiplexor 304 is provided to de-multiplex trunk (e.g. T1) lines306 from PSTN 302 to individual channels 308 that are attached to packet-switched ports of enterprise switch 120. Such inverse multiplexors are well known in the art. ECP 126 is further provided with functionality whereby it can "dial-up" circuit connections over PSTN 302 in response to requests from endstations within the LAN. Once a connection is established, packets belonging to the connection are passed from the requesting endstation within the LAN to PSTN 302 via enterprise switch 120 and inverse multiplexor 304.

As a next alternative, such virtual switched circuit connections can also be handed off to PSTN 302 by equipping ECP 126 to inter-operate and communicate over Signaling System 7 or similar signaling networks, well known in the art, to established Service Control Points (SCPs) 310 within PSTN 302 to manage the end-to-end setup of circuit switched connections through the ISDN PSTN. This approach is, of course, normally limited to connections having a bandwidth of one or two bearer channels.

Another possible interoperation of a LAN adapted for virtual circuit connections in accordance with the invention is with on-demand broadband connections such as that described in U.S. Patent Application No. 08/966,634, the contents of which are incorporated herein by reference. In this case, a premises switch 312 such as that described in the afore-mentioned application is further provided for managing the aggregation of bandwidth necessary for a virtual circuit connection within the LAN. Specifically, premises switch 312 controls the aggregation of bandwidth across multiple individual channels 316 connected to enterprise switch 120, which bandwidth is obtained from trunk lines (e.g. T1 lines) 314. The virtual circuit connection from an endstation within the LAN becomes a reserved connection in PSTN 302 via the control of a Network Control System Server (NCSS) such as that described in the afore-mentioned application. ECP 126 is further provided with additional functionality for communicating with the NCSS to establish reserved connections of arbitrary bandwidth from endstations within the LAN, across switched WAN connections, to another endstation on another LAN.

Yet another possible interoperation of a LAN adapted for virtual circuit connections in accordance with the invention is with IP connections via the Public Internet or Intranet 318 and existing router 124. Such connections can include IP telephony or other virtual circuit connections. Such connections can also include those compatible with RSVP or other reserved circuit protocols.

## Claims

1. An apparatus for establishing a reserved connection having a required bandwidth between first and second endstations (104,106) in a network (100), said apparatus comprising:
an enterprise control point (126) constructed and arranged to identify a path between said first and second endstations (104,106), said path including at least one switch (102,114,120) having a first port (108) in packet communication with said first endstation and a second port (108) in packet communication with said second endstation; **characterised in that**:
the enterprise control point (126) is a centralized enterprise control point and includes (i) a network elements registry (210) constructed and arranged to list bandwidth capacities of elements within said network (100) including said first and second endstations (104,106), said at least one switch (102,114,120), and said first and second ports (108); and, (ii) a connection controller (206) constructed and arranged to determine a capacity of said path in accordance with said network elements registry (210), and to refuse to establish said reserved connection if said capacity is less than said required bandwidth,
wherein the enterprise control point (126) is constructed and arranged to cause said at least one switch (102,114,120) to forward packets belonging to said reserved connection between said first and second ports (108) along said path with higher priority than packets not belonging to said reserved connection.

2. An apparatus according to claim 1, said apparatus constructed and arranged to establish a second reserved connection between third and fourth endstations (104,106) in said network (100), said second reserved connection having a second required bandwidth, at least one of said third and fourth endstations (104,106) being in packet communication with a common one of said first and second ports (108) of said at least one switch (102,114,120), a second path between said third and fourth endstations (104,106) including said at least one switch (102,114,120), said apparatus comprising:
a current connection list (216) constructed and arranged to maintain information regarding all reserved connections in said network, said connection controller (206) being constructed and arranged to determine a second capacity of said second path in accordance with said network elements registry (210), said connection controller (206) being constructed and arranged to reduce said second capacity of said second path in accordance with said current connection list (216), said connection controller (206) being constructed and arranged to refuse to establish said second reserved connection if said reduced second capacity is less than said second required bandwidth.

3. An apparatus according to claim 1 or claim 2, comprising:
a policies list (214) constructed and arranged to maintain information regarding rules established for said network (100), said connection controller (206) being constructed and arranged to reduce said capacity of said path in accordance with said policies list (214).

4. An apparatus according to any of claims 1 to 3, comprising a signaling channel (130) for signaling messages concerning said reserved connection, said messages including a predetermined identifier to distinguish said messages from other network traffic, said signaling channel (130) being coupled to said first and second endstations (104,106) and said at least one switch (102,114,120).

5. An apparatus according to claim 4, wherein said enterprise control point (126) includes:
a signaling interface (202) coupled to said signaling channel (130), said signaling interface (202) constructed and arranged to receive a connection request message from one of said first and second endstations (104,106) via said signaling channel (130), said enterprise control point (126) being constructed and arranged to identify said path in response to said connection request message, said enterprise control point (126) being constructed and arranged to send a reservation message in accordance with said identified path.

6. An apparatus according to any of claims 1 to 3, comprising a signaling channel (130), wherein said signaling channel (130) comprises messages including a predetermined identifier to distinguish said messages from other network traffic, said enterprise control point (126) including:
a signaling interface (202) coupled to said signaling channel (130), said signaling interface (202) being constructed and arranged to receive a connection request message from one of said first and second endstations (104,106) via said signaling channel (130), said enterprise control point (126) being constructed and arranged to identify said path in response to said connection request message, said connection controller (206) being constructed and arranged to identify said capacity in response to said connection request message, said connection controller (206) being constructed and arranged to send said reservation message to said switch via said signaling interface (202) in accordance with said path identified by said path enterprise control point (126), said connection controller (206) being constructed and arranged to send a connection refused message to said one of said first and second endstations (104,106) via said signaling interface (202) when said connection controller (206) refuses to establish said reserved connection.

7. An apparatus according to any of claims 1 to 6, wherein said enterprise control point (126) includes:
a connection monitor (208) for permanently recording details concerning said reserved connection.

8. An apparatus according to claim 7, wherein said details include one or more of an endstation identifier of one or both of said first and second endstations (104,106), a switch identifier of said switch (102,114,120), a bandwidth of said reserved connection, and an elapsed time of said reserved connection.

9. An apparatus according to any of claims 1 to 8 in combination with a said at least one switch (102,114,120), wherein said switch includes:
a connection pairs list (232) that stores identifiers of said first and second endstations (104,106) involved in said reserved connection;
a switch table (236) that corresponds said identifiers with said first and second ports (108);
an enhanced switch engine (234) coupled to said connection pairs list (232) and said switch table (236) that examines incoming packets to said switch (102,114,120) and determines whether said incoming packets belong to said reserved connection in accordance with said connection pairs list (232), said enhanced switch engine (234) being constructed and arranged to forward said incoming packets between said first and second ports (108) in accordance with said determination and said switch table (236).

10. An apparatus according to claim 9, wherein said enhanced switch engine (234) is constructed and arranged to drop incoming packets that do not belong to said reserved connection in accordance with said determination.

11. An apparatus according to claim 9 or claim 10, wherein said switch (102,114,120) includes:
a bandwidth monitor (238) for monitoring an actual bandwidth consumed by said reserved connection.

12. An apparatus according to claim 11, wherein:
said bandwidth monitor (238) is constructed and arranged to notify said enhanced switch engine (234) if said actual bandwidth is less than a bandwidth capacity associated with said first and second ports (108) by a predetermined margin, said enhanced switch engine (234) being constructed and arranged to permit packets not belonging to said reserved connection to be forwarded between said first and second ports (108) in accordance with said notification.

13. An apparatus according to claim 11 or claim 12, wherein said bandwidth monitor (238) is constructed and arranged to alert said enhanced switch engine (234) if said actual bandwidth is greater than a reserved bandwidth of said reserved connection, said enhanced switch engine (234) being constructed and arranged to forward packets belonging to said reserved connection between said first and second ports (108) in accordance with said alert.

14. An apparatus according to claim 5 in combination with a said at least switch (102,114,120), wherein said switch includes:
a reservation interface (230) for receiving said reservation message, and updating a connection pairs list (232) in accordance with said reservation message; and
an enhanced switch engine (234) coupled to said connection pairs list (232) for examining incoming packets to said switch (102.114.120) and determines whether said incoming packets belong to said reserved connection in accordance with said connection pairs list (102.114.120), said enhanced switch engine (234) being constructed and arranged to forward said incoming packets between said first and second ports (108) in accordance with said determination.

15. A method for establishing a reserved connection having a required bandwidth between first and second endstations (104,106) in a network (100), said method comprising:
identifying a path between said first and second endstations (104,106), said path including at least on switch (102,114,120) having a first port (108) in packet communication with said first endstation and a second port (108) in packet communication with said second endstation; **characterised by**:
a centralized enterprise control point determining a capacity of said path in accordance with a network elements registry (210) that lists bandwidth capacities of elements within said network (100) including said first and second endstations (104,106), said switch (102,114,120), and said first and second ports (108);
refusing said reserved connection if said capacity is less than said required bandwidth; and,
causing said at least one switch (102,114,120) to forward packets belonging to said reserved connection between said first and second ports (108) along said path with higher priority than packets not belonging to said reserved connection.

16. A method according to claim 15, said method further establishing a second reserved connection between third and fourth endstations (104,106) in said network (100), said second reserved connection having a second required bandwidth, at least one of said third and fourth endstations (104,106) being in packet communication with a common one of said first and second ports (108) of said at least one switch (102,114,120), a second path between said third and fourth endstations (104,106) including said at least one switch (102,114,120), said method comprising:
identifying said second path;
determining a second capacity of said second path;
reducing said second capacity in accordance with said required bandwidth of said reserved connection; and
refusing said second reserved connection if said reduced second capacity is less than said second required bandwidth.

17. A method according to claim 15, comprising:
reducing said capacity in accordance with rules established for said network (100).

18. A method according to any of claims 15 to 17, comprising:
signaling messages concerning said reserved connection to said first and second endstations (104,106) and said at least one switch (102,114,120), said messages including a predetermined identifier to distinguish said messages from other network traffic.

19. A method according to claim 18, comprising:
receiving a connection request message from one of said first and second endstations (104,106), said path identifying step being responsive to said connection request message;
sending a reservation message to said at least one switch (102,114,120) via said signaling means in accordance with said path identified in said path identifying step.

20. A method according to claim 15, comprising:
signaling messages concerning said reserved connection to said first and second endstations (104,106) and said at least one switch (102,114,120), said messages including a predetermined identifier to distinguish said messages from other network traffic;
receiving a connection request message from one of said first and second endstations (104,106), said path identifying step and said capacity determining step being responsive to said connection request message;
sending a reservation message to said at least one switch in accordance with said path identified in said path identifying step; and
sending a connection refused message to said one of said first and second endstations responsive to said connection refusing step.

21. A method according to any of claims 15 to 20, comprising:
monitoring said reserved connection, said monitoring step including means for permanently recording details concerning said reserved connection.

22. A method according to claim 21. wherein said details include one or more of an endstation identifier of one or both of said first and second endstations (104,106), a switch identifier of said at least one switch (102.114.120), a bandwidth of said reserved connection, and an elapsed time of said reserved connection.

23. A method according to any of claims 15 to 22, comprising:
determining whether incoming packets to said at least one switch (102,114,120) belong to said reserved connection; and
forwarding said incoming packets between said first and second ports (108) of said at least one switch (102,114,120) in accordance with said determination.

24. A method according to claim 23, comprising:
dropping said incoming packets that do not belong to said reserved connection in accordance with said determination.

25. A method according to any of claims 15 to 24, comprising:
monitoring an actual bandwidth consumed by said reserved connection.

26. A method according to claim 25, comprising:
permitting packets not belonging to said reserved connection to be forwarded between said first and second ports (108) of said at least one switch (102,114,120) if said actual bandwidth is less than a bandwidth capacity associated with said first and second ports (108) by a predetermined margin.

27. A method according to claim 25, comprising:
detecting if said actual bandwidth is greater than a reserved bandwidth of said reserved connection, said step of forwarding packets belonging to said reserved connection between said first and second ports (108) of said at least one switch being performed in further accordance with said detection.

## Patentansprüche

1. Vorrichtung zum Herstellen einer reservierten Verbindung einer benötigten Bandbreite zwischen einer ersten und zweiten Endstelle (104, 106) in einem Netzwerk (100), wobei die Vorrichtung folgendes umfasst:
einen Betriebs-Steuerpunkt (126), welcher dafür konstruiert und eingerichtet ist, einen Weg zwischen der ersten und zweiten Endstelle (104, 106) zu identifizieren, wobei der Weg wenigstens einen Schalter (102, 114, 120) umfasst, welcher einen ersten Anschluss (108) in Paketkommunikation mit der ersten Endstelle und einen zweiten Anschluss (108) in Paketkommunikation mit der zweiten Endstelle aufweist; **dadurch gekennzeichnet, dass**:
es sich bei dem Betriebs-Steuerpunkt (126) um einen zentralen Betriebs-steuerpunkt handelt und dieser (i) ein Netzwerkelementregister (210) umfasst, welches dafür konstruiert und eingerichtet ist, Bandbreitekapazitäten von Elementen in dem Netzwerk (100), z.B. der ersten und zweiten Endstelle (104, 106), des wenigstens einen Schalters (102, 114, 120) und des ersten und zweiten Anschlusses (108), aufzulisten; und (ii) eine Verbindungssteuereinheit (206), welche dafür konstruiert und eingerichtet ist, gemäß dem Netzwerkelementregister (210) eine Kapazität des Weges zu ermitteln und die Herstellung der reservierten Verbindung zu verweigern, wenn die Kapazität geringer ist als die benötigte Bandbreite;
wobei der Betriebs-Steuerpunkt (126) dafür konstruiert und eingerichtet ist, zu bewirken, dass der wenigstens eine Schalter (102, 114, 120) Pakete, welche zu der reservierten Verbindung gehören, zwischen dem ersten und zweiten Anschluss (108) entlang dem Weg mit höherer Priorität weiterleitet als Pakete, welche nicht zu der reservierten Verbindung gehören.

2. Vorrichtung nach Anspruch 1, wobei die Vorrichtung dafür konstruiert und eingerichtet ist, eine zweite reservierte Verbindung zwischen einer dritten und vierten Endstelle (104, 106) in dem Netzwerk (100) herzustellen, wobei die zweite reservierte Verbindung eine zweite benötigte Bandbreite aufweist, die dritte und/oder die vierte Endstelle (104, 106) mit einem gemeinsamen des ersten und zweiten Anschlusses (108) des wenigstens einen Schalters (102, 114, 120) in Paketkommunikation steht und ein zweiter Weg zwischen der dritten und vierten Endstelle (104, 106) den wenigstens einen Schalter (102, 114, 20) umfasst, wobei die Vorrichtung folgendes umfasst:
eine Liste der aktuellen Verbindungen (216), welche dafür konstruiert und eingerichtet ist, Informationen bezüglich aller reservierten Verbindungen in dem Netzwerk zu unterhalten, wobei die Verbindungssteuereinheit (206) dafür konstruiert und eingerichtet ist, gemäß dem Netzwerkelementregister (210) eine zweite Kapazität des zweiten Weges zu ermitteln, wobei die Verbindungssteuereinheit (206) dafür konstruiert und eingerichtet ist, die zweite Kapazität des zweiten Weges gemäß der Liste der aktuellen Verbindungen (216) zu verringern, und die Verbindungssteuereinheit (206) dafür konstruiert und eingerichtet ist, die Herstellung der zweiten reservierten Verbindung zu verweigern, wenn die verringerte zweite Kapazität geringer ist als die zweite benötigte Bandbreite.

3. Vorrichtung nach Anspruch 1 oder 2, welche folgendes umfasst:
eine Liste der Verfahrensweisen (214), welche dafür konstruiert und eingerichtet ist, Informationen bezüglich der für das Netzwerk (100) aufgestellten Regeln zu unterhalten, wobei die Verbindungssteuereinheit (206) dafür konstruiert und
eingerichtet ist, die Kapazität des Weges gemäß der Liste der Verfahrensweisen (214) zu verringern.

4. Vorrichtung nach einem der Ansprüche 1 bis 3, welche einen Signalisierungskanal (130) zum Signalisieren von Meldungen umfasst, die die reservierte Verbindung betreffen, wobei die Meldungen eine vorgegebene Kennung umfassen, um die Meldungen von anderem Netzwerkverkehr zu unterscheiden, wobei der Signalisierungskanal (130) mit der und zweiten Endstelle (104, 106) und dem wenigstens einen Schalter (102, 114, 120) verbunden ist.

5. Vorrichtung Anspruch 4, wobei der Betriebs-Steuerpunkt (126) folgendes umfasst:
eine Signalisiemngsschnittstelle (202), welche mit dem Signailsierungskanal (130) verbunden ist, wobei die Signalisiemngsschnittstelle (202) dafür konstruiert und eingerichtet ist, von der ersten oder zweiten Endstelle (104, 106) über den Signalisierungskanal (130) eine Verbindungsanfordemngsmeldung zu empfangen, wobei der Betriebs-Steuerpunkt (126) dafür konstruiert und eingerichtet ist, den Weg in Reaktion auf die Verbindungsanforderungsmeldung zu identifizieren, und der Betriebs-Steuerpunkt (126) dafür konstruiert und eingerichtet ist, gemäß dem identifizierten Weg eine Reservierangsmeldung zu senden.

6. Vorrichtung nach einem der Ansprüche 1 bis 3, welche einen Signalisierungskanal (130) umfasst, wobei der Signalisierungskanal (130) Meldungen umfasst, die eine vorgegebene Kennung umfassen, um die Meldungen von anderem Netzwerkverkehr zu unterscheiden, wobei der Betriebs-Steuerpunkt (126) folgendes umfasst:
eine Signalisierungsschnittstelle (202), die mit einem Signalisierungskanal (130) verbunden ist, wobei die Signalisierungsschnittsteile (202) dafür konstruiert und
eingerichtet ist, von der ersten oder zweiten Endstelle (104, 106) über den Signalisierungskanal (130) eine Verbindungsanforderungsmeldung zu empfangen,
wobei der Betriebs-Steuerpunkt (126) dafür konstruiert und eingerichtet ist, den Weg in Reaktion auf die Verbindungsaufordemngsmeldung zu identifizieren, die Verbindungssteuereinheit (205) dafür konstruiert und eingerichtet ist, in Reaktion auf die Verbindungsanfbrderungsmeldung die Kapazität zu identifizieren, die Verbindungssteuereinheit (206) dafür konstruiert und eingerichtet ist, die Reservierungsmeldung über die Signalisierungsschnitistelle (202) gemäß dem vom Betriebs-Steuerpunkt (126) identifizierten Weg an den Schalter zu senden, und die Verbindungssteuereinheit (206) dafür konstruiert und eingerichtet ist, über die Signalisierungsschnittstelle (202) eine Verbindungsverweigerungsmeldungsmeldung an die oder zweite Endsteile (104, 106) zu senden, wenn die Verbindungssteuereinheit (206) die Herstellung der reservierten Verbindung verweigert.

7. Vorrichtung nach einem der Ansprüche 1 bis 6, wobei der Betriebs-Steuerpunkt (126) folgendes umfasst:
einen Verbindungsmonitor (208) zum ständigen Aufzeichnen von Einzelheiten, welche die reservierte Verbindung betreffen.

8. Vorrichtung nach Anspruch 7, wobei die Einzelheiten eines oder mehreres aus einer Endstellenkennung der ersten und/oder zweiten Endstelle (104, 106), einer Schaltungskennung des Schalters (102, 114, 120), Bandbreite der reservierten Verbindung und einer vergangenen Zeit der reservierten Verbindung umfassen.

9. Vorrichtung nach der Ansprüche 1 bis 8 in Kombination mit dem wenigstens einen Schalter (102, 114, 120), wobei der Schalter folgendes umfasst:
eine Verbindungspaarliste (232), in welcher Kennungen der ersten und zweiten Endstelle (104, 106) gespeichert sind, die von der reservierten Verbindung betroffen sind;
eine Schaltertabelle (236), welche die Kennungen mit dem ersten und zweiten Anschluss (108) in Beziehung setzt;
eine verbesserte Schaltermaschine (234), welche mit der Verbindungspaarliste (232) und der Schaltertabelle (236) verbunden ist, welche in den Schalter (102, 114, 120) eingehende Pakete untersucht und gemäß der Verbindungspaarliste (232) ermittelt, ob die eingehenden Pakete zu der reservierten Verbindung gehören, wobei die verbesserte Schaltermaschine (234) dafür konstruiert und eingerichtet ist, die eingehenden Pakete gemäß der Ermittlung und der Schaltertabelle (236) zwischen dem ersten und zweiten Anschluss (108) weiterzuleiten.

10. Vorrichtung nach Anspruch 9, wobei die verbesserte Schaltermaschine (234) dafür konstruiert und eingerichtet ist, eingehende Pakete, weiche der Ermittlung nicht zu der reservierten Verbindung gehören, zu verwerfen.

11. Vorrichtung nach Anspruch 9 oder 10, wobei der Schalter (102, 114, 120) folgendes umfasst:
einen Bandbreitemonitor (239) zum Überwachen einer tatsächlichen Bandbreite, welche von der reservierten Verbindung benutzt wird.

12. Vorrichtung nach Anspruch 11, wobei:
der Bandbreitemonitor (23 8) dafür konstruiert und eingerichtet ist, die verbesserte Schaltermaschine (234) zu benachrichtigen, wenn die tatsächliche Bandbreite um einen vorgegebenen Wert geringer ist als eine zu dem ersten und zweiten Anschluss (108) gehörende Bandbreitekapazität, wobei die verbesserte Schaltermaschine (234) dafür konstruiert und eingerichtet ist, gemäß der Benachrichtigung zuzulassen, dass Pakete, die nicht zu der reservierten Verbindung gehören, zwischen dem ersten und zweiten Anschluss (108) weitergeleitet werden.

13. Vorrichtung nach Anspruch 11 oder 12, wobei der Bandbreitemonitor (23 8) dafür konstruiert und eingerichtet ist, die verbesserte Schaltermaschine (234) zu warnen, wenn die tatsächliche Bandbreite größer ist als eine reservierte Bandbreite der reservierten Verbindung, wobei die verbesserte Schaltermaschine (234) dafür konstruiert und eingerichtet ist, Pakete, die zu der reservierten Verbindung gehören, gemäß der Warnung zwischen dem ersten und zweiten Anschluss (108) weiterzuleiten.

14. Vorrichtung nach Anspruch 5 in Kombination mit dem wenigstens einen Schalter (102, 114, 120), wobei der Schalter folgendes umfasst:
eine Reservierungsschnittstelle (230) zum Empfangen der Reservierungsmeldung und Aktualisieren einer Verbindungspaarliste (232) gemäß der Reservierungsmeldung; und
eine verbesserte Schaltermaschine (234), welche mit der Verbindungspaarliste (232) verbunden ist, um in den Schalter (102, 114, 120) eingehende Pakete zu untersuchen und gemäß der Verbindungspaarliste (232) zu ermitteln, ob die eingehenden Pakete zu der reservierten Verbindung gehören, wobei die verbesserte Schaltermaschine (234) dafür konstruiert und eingerichtet ist, die eingehenden Pakete gemäß der Ermittlung zwischen dem ersten und zweiten Anschluss (108) weiterzuleiten.

15. Verfahren zur Herstellung einer reservierten Verbindung einer benötigten Bandbreite zwischen einer ersten und zweiten Endstelle (104, 106) in einem Netzwerk (100), wobei das Verfahren folgendes umfasst:
Identifizieren eines Weges zwischen der ersten und zweiten Endstelle (104, 106), wobei der Weg wenigstens einen Schalter (102, 114, 120) umfasst, welcher einen ersten Anschluss (108) in Paketkommunikation mit der ersten Endstelle und einen zweiten Anschluss (108) in Paketkommunikation mit der zweiten Endstelle aufweist; **gekennzeichnet durch**:
Ermitteln Kapazität des Weges **durch** einen zentralen Betriebs-Steuerpunkt gemäß einem Netzwerkelementregister (210), welches Bandbreitekapazitäten von Elementen in dem Netzwerk (100), z.B. der ersten und zweiten Endstelle (104, 106), des wenigstens einen Schalters (102, 114, 120) und des ersten und zweiten Anschlusses (108), auflistet;
Verweigern der reservierten Verbindung, wenn die Kapazität geringer ist als die benötigte Bandbreite; und
Bewirken, dass der wenigstens eine Schalter (102, 114, 120) Pakete, welche zu der reservierten Verbindung gehören, zwischen dem ersten und zweiten Anschluss (108) entlang dem Weg mit höherer Priorität weiterleitet als Pakete, welche nicht zu der reservierten Verbindung gehören.

16. Verfahren nach Anspruch 15, wobei durch das Verfahren ferner eine zweite reservierte Verbindung zwischen einer dritten und vierten Endstelle (104, 106) in dem Netzwerk (100) hergestellt wird, wobei die zweite reservierte Verbindung eine zweite benötigte Bandbreite aufweist, die dritte und/oder die vierte Endstelle (104, 106) mit einem gemeinsamen des ersten und zweiten Anschlusses (108) des wenigstens einen Schalters (102, 114, 120) in Paketkommunikation steht und ein zweiter Weg zwischen der dritten und vierten Endstelle (104, 106) den wenigstens einen Schalter (102, 114, 120) umfasst, wobei das Verfahren das Folgende umfasst:
Identifizieren des zweiten Weges;
Ermitteln einer zweiten Kapazität des zweiten Weges;
Verringern der zweiten Kapazität gemäß der benötigten Bandbreite der reservierten Verbindung; und
Verweigern der zweiten reservierten Verbindung, wenn die verringerte zweite Kapazität geringer ist als die zweite benötigte Bandbreite.

17. Verfahren nach Anspruch 15, welches folgendes umfasst:
Verringern der Kapazität gemäß den für das Netzwerk (100) aufgestellten Regeln.

18. Verfahren nach einem der Ansprüche 15 bis 17, welches folgendes umfasst:
Signalisieren von Meldungen, welche die reservierte Verbindung betreffen, an die erste und zweite Endstelle (104, 106) und den wenigstens einen Schalter (102, 114, 120), wobei die Meldungen eine vorgegebene Kennung umfassen, um die Meldungen von anderem Netzwerkverkehr zu unterscheiden.

19. Verfahren nach Anspruch 18, welches folgendes umfasst:
Empfangen einer Verbindungsanforderungsmeldung von der ersten oder zweiten Endstelle (104, 106), wobei der Wegidentifizierungsschritt in Reaktion auf die Verbindungsanfbrderungsmeldung vorgenommen wird;
Senden einer Reservierungsmeldung gemäß dem in dem Wegidentifizierungsschritt identifizierten Weg über das Signalisierungsmittel an den wenigstens einen Schalter (102, 114, 120).

20. Verfahren Anspruch 15, welches folgendes umfasst:
Signalisieren von Meldungen, weiche die reservierte Verbindung betreffen, an die erste und zweite Endstelle (104, 106) und den wenigstens einen Schalter (102, 114, 120), wobei die Meldungen eine vorgegebene Kennung umfassen, um die Meldungen von anderem Netzwerkverkehr zu unterscheiden;
Empfangen einer Verbindungsanforderungsmeldung von einer der ersten und zweiten Endstelle (104, 106), wobei der Wegidentifizierungsschritt und der Kapazitätsermitthmgsschritt in Reaktion auf die Verbindungsaafbrdemngsmeidung vorgenommen werden;
Senden einer Reservierungsmeldung an den wenigstens einen Schalter gemäß dem in dem Wegidentifizierungsschritt identifizierten Weg; und
Senden einer Verbindungsverweigerungsmeldung an die eine der ersten und zweiten Endstelle in Reaktion auf den Verbindungsverweigerungsschritt.

21. Verfahren nach einem der Ansprüche 15 bis 20, weiches folgendes umfasst:
Überwachen der reservierten Verbindung, wobei der Überwachungsschritt Mittel zum ständigen Aufzeichnen von Einzelheiten umfasst, welche die reservierte Verbindung betreffen.

22. Verfahren nach Anspruch 21, wobei die Einzelheiten eines oder mehreres aus einer Endstellenkennung der ersten und/oder zweiten Endstelle (104, 106), einer Schaltungskennung des wenigstens einen Schalters (102, 114, 120), einer Bandbreite der reservierten Verbindung und einer vergangenen Zeit der reservierten Verbindung umfassen.

23. Verfahren nach einem der Ansprüche 15 bis 22, welches folgendes umfasst:
Ermitteln, ob in den wenigstens einen Schalter (102, 114, 120) eingehende Pakete zu der reservierten Verbindung gehören; und
Weiterleiten der eingehenden Pakete zwischen dem ersten und zweiten Anschluss (108) des wenigstens einen Schalters (102, 114, 120) gemäß der Ermittlung.

24. Verfahren nach Anspruch 23, welches folgendes umfasst:
Verwerfen der eingehenden Pakete, welche gemäß der Ermittlung nicht zu der reservierten Verbindung gehören.

25. Verfahren nach einem der Ansprüche 15 bis 24, welches folgendes umfasst:
Überwachen einer tatsächlichen Bandbreite, welche von der reservierten Verbindung benutzt wird.

26. Verfahren nach Anspruch 25, welches folgendes umfasst:
Zulassen, dass Pakete, welche nicht zu der reservierten Verbindung gehören, zwischen dem ersten und zweiten Anschluss (108) des wenigstens einen Schalters (102, 114, 120) weitergeleitet werden, wenn die tatsächliche Bandbreite um einen vorgegebenen Wert geringer ist als eine Bandbreitenkapazität, die zu dem ersten und zweiten Anschluss (108) gehört.

27. Verfahren nach Anspruch 25, welches folgendes umfasst:
Erkennen, wenn die tatsächliche Bandbreite größer ist als eine reservierte Bandbreite der reservierten Verbindung, wobei der Schritt des Weiterleitens von Paketen, welche zu der reservierten Verbindung gehören, zwischen dem ersten und zweiten Anschluss (108) des wenigstens einen Schalters nach weiterer Maßgabe der Erkennung durchgeführt wird.

## Revendications

1. Appareil servant à établir une connexion réservée ayant une bande passante requise entre des première et deuxième stations d'extrémité (104, 106) dans un réseau (100), ledit appareil comprenant :
un point de contrôle d'entreprise (126) élaboré et
agencé pour identifier une voie entre lesdites première et deuxième stations d'extrémité (104, 106), ladite voie comprenant au moins un commutateur (102, 114, 120) ayant un premier port (108) dans une communication de paquet avec ladite première station d'extrémité et un second port (108) dans une communication de paquet avec ladite deuxième station d'extrémité ; **caractérisé en ce que** :
le point de contrôle d'entreprise (126) est un point de contrôle d'entreprise centralisé et comprend (i) un registre des éléments de réseau (210) élaboré et agencé pour lister les capacités de bande passante des éléments dans ledit réseau (100) comprenant lesdites première et deuxième stations d'extrémité (104, 106), ledit au moins un commutateur (102, 114, 120), et lesdits premier et second ports (108) ; et, (ii) une unité de commande de connexion (206) élaborée et agencée pour déterminer une capacité de ladite voie en fonction dudit registre des éléments de réseau (210), et pour refuser d'établir ladite connexion réservée si ladite capacité est inférieure à ladite bande passante requise,
dans lequel le point de contrôle d'entreprise (126) est élaboré et agencé pour amener ledit au moins un commutateur (102, 114, 120) à transmettre des paquets appartenant à ladite connexion réservée entre lesdits premier et second ports (108) le long de ladite voie avec une priorité supérieure à celle des paquets n'appartenant pas à ladite connexion réservée.

2. Appareil selon la revendication 1, ledit appareil étant élaboré et agencé pour établir une seconde connexion réservée entre des troisième et quatrième stations d'extrémité (104, 106) dans ledit réseau (100), ladite seconde connexion réservée ayant une seconde bande passante requise, au moins une parmi lesdites troisième et quatrième stations d'extrémité (104, 106) étant dans une communication de paquet avec un port commun parmi lesdits premier et second ports (108) dudit au moins un commutateur (102, 114, 120), une seconde voie entre lesdites troisième et quatrième stations d'extrémité (104, 106) comprenant ledit au moins un commutateur (102, 114, 120), ledit appareil comprenant :
une liste de connexion actuelle (216) élaborée et agencée pour conserver des informations concernant toutes les connexions réservées dans ledit réseau, ladite unité de commande de connexion (206) étant élaborée et agencée pour déterminer une seconde capacité de ladite seconde voie en fonction dudit registre des éléments de réseau (210), ladite unité de commande de connexion (206) étant élaborée et agencée pour réduire ladite seconde capacité de ladite seconde voie en fonction de ladite liste de connexion actuelle (216), ladite unité de commande de connexion (206) étant élaborée et agencée pour refuser d'établir ladite seconde connexion réservée si ladite seconde capacité réduite est inférieure à ladite seconde bande passante requise.

3. Appareil selon la revendication 1 ou la revendication 2, comprenant :
une liste de règles (214) élaborée et agencée pour conserver des informations concernant les règles établies pour ledit réseau (100), ladite unité de commande de connexion (206) étant élaborée et agencée pour réduire ladite capacité de ladite voie en fonction de ladite liste de règles (214).

4. Appareil selon l'une quelconque des revendications 1 à 3, comprenant un canal de signalisation (130) pour signaler des messages concernant ladite connexion réservée, lesdits messages comprenant un identifiant prédéterminé pour distinguer lesdits messages d'un autre trafic du réseau, ledit canal de signalisation (130) étant couplé auxdites première et deuxième stations d'extrémité (104, 106) et audit au moins un commutateur (102, 114, 120).

5. Appareil selon la revendication 4, dans lequel ledit point de contrôle d'entreprise (126) comprend :
une interface de signalisation (202) couplée audit canal de signalisation (130), ladite interface de signalisation (202) étant élaborée et agencée pour recevoir un message de demande de connexion depuis une parmi lesdites première et deuxième stations d'extrémité (104, 106) via ledit canal de signalisation (130), ledit point de contrôle d'entreprise (126) étant élaboré et agencé pour identifier ladite voie en réponse audit message de demande de connexion, ledit point de contrôle d'entreprise (126) étant élaboré et agencé pour envoyer un message de réservation en fonction de ladite voie identifiée.

6. Appareil selon l'une quelconque des revendications 1 à 3, comprenant un canal de signalisation (130), dans lequel ledit canal de signalisation (130) comprend des messages comprenant un identifiant prédéterminé pour distinguer lesdits messages d'un autre trafic du réseau, ledit point de contrôle d'entreprise (126) comprenant :
une interface de signalisation (202) couplée audit canal de signalisation (130), ladite interface de signalisation (202) étant élaborée et agencée pour recevoir un message de demande de connexion depuis une desdites première et deuxième stations d'extrémité (104, 106) via ledit canal de signalisation (130), ledit point de contrôle d'entreprise (126) étant élaboré et agencé pour identifier ladite voie en réponse audit message de demande de connexion, ladite unité de commande de connexion (206) étant élaborée et agencée pour identifier ladite capacité en réponse audit message de demande de connexion, ladite unité de commande de connexion (206) étant élaborée et agencée pour envoyer ledit message de réservation audit commutateur via ladite interface de signalisation (202) en fonction de ladite voie identifiée par ledit point de contrôle d'entreprise (126) de voie, ladite unité de commande de connexion (206) étant élaborée et agencée pour envoyer un message de connexion refusée à ladite une parmi lesdites première et deuxième stations d'extrémité (104, 106) via ladite interface de signalisation (202) lorsque ladite unité de commande de connexion (206) refuse d'établir ladite connexion réservée.

7. Appareil selon l'une quelconque des revendications 1 à 6, dans lequel ledit point de contrôle d'entreprise (126) comprend :
un dispositif de surveillance de connexion (208) pour enregistrer en permanence les détails concernant ladite connexion réservée.

8. Appareil selon la revendication 7, dans lequel lesdits détails comprennent un ou plusieurs éléments parmi un identifiant de station d'extrémité d'une ou des deux desdites première et deuxième stations d'extrémité (104, 106), un identifiant de commutateur dudit commutateur (102, 114, 120), une bande passante de ladite connexion réservée, et un temps écoulé de ladite connexion réservée.

9. Appareil selon l'une quelconque des revendications 1 à 8 en combinaison avec un dit au moins un commutateur (102, 114, 120), dans lequel ledit commutateur comprend :
une liste de paires de connexion (232) qui stocke les identifiants desdites première et deuxième stations d'extrémité (104, 106) impliquées dans ladite connexion réservée ;
une table de commutation (236) qui correspond auxdits identifiants avec lesdits premier et second ports (108) ;
un moteur de commutation amélioré (234) couplé à ladite liste de paires de connexion (232) et à ladite table de commutation (236) qui examine les paquets entrants sur ledit commutateur (102, 114, 120) et détermine si lesdits paquets entrants appartiennent à ladite connexion réservée en fonction de ladite liste de paires de connexion (232), ledit moteur de commutation amélioré (234) étant élaboré et agencé pour transmettre lesdits paquets entrants entre lesdits premier et second ports (108) en fonction de ladite détermination et de ladite table de commutation (236).

10. Appareil selon la revendication 9, dans lequel ledit moteur de commutation amélioré (234) est élaboré et agencé pour abandonner les paquets entrants qui n'appartiennent pas à ladite connexion réservée en fonction de ladite détermination.

11. Appareil selon la revendication 9 ou la revendication 10, dans lequel ledit commutateur (102, 114, 120) comprend :
un dispositif de surveillance de bande passante (238) pour surveiller une bande passante réelle utilisée par ladite connexion réservée.

12. Appareil selon la revendication 11, dans lequel :
ledit dispositif de surveillance de bande passante (238) est élaboré et agencé pour notifier ledit moteur de commutation amélioré (234) si ladite bande passante réelle est inférieure à une capacité de bande passante associée auxdits premier et second ports (108) par une marge prédéterminée, ledit moteur de commutation amélioré (234) étant élaboré et agencé pour permettre aux paquets n'appartenant pas à ladite connexion réservée d'être transmis entre lesdits premier et second ports (108) en fonction de ladite notification.

13. Appareil selon la revendication 11 ou la revendication 12, dans lequel ledit dispositif de surveillance de bande passante (238) est élaboré et agencé pour alerter ledit moteur de commutation amélioré (234) si ladite bande passante réelle est supérieure à une bande passante réservée de ladite connexion réservée, ledit moteur de commutation amélioré (234) étant élaboré et agencé pour transmettre des paquets appartenant à ladite connexion réservée entre lesdits premier et second ports (108) en fonction de ladite alerte.

14. Appareil selon la revendication 5 en combinaison avec un dit au moins un commutateur (102, 114, 120),
dans lequel ledit commutateur comprend:
une interface de réservation (230) pour recevoir ledit message de réservation, et une mise à jour d'une liste de paires de connexion (232) en fonction dudit message de réservation ; et
un moteur de commutation amélioré (234) couplé à ladite liste de paires de connexion (232) pour examiner les paquets entrants sur ledit commutateur (102, 114, 120) et détermine si lesdits paquets entrants appartiennent à ladite connexion réservée en fonction de ladite liste de paires de connexion (102, 114, 120), ledit moteur de commutation amélioré (234) étant élaboré et agencé pour transmettre lesdits paquets entrants entre lesdits premier et second ports (108) en fonction de ladite détermination.

15. Procédé servant à établir une connexion réservée ayant une bande passante requise entre des première et deuxième stations d'extrémité (104, 106) dans un réseau (100), ledit procédé comprenant :
l'identification d'une voie entre lesdites première et deuxième stations d'extrémité (104, 106), ladite voie comprenant au moins un commutateur (102, 114, 120) ayant un premier port (108) dans une communication de paquet avec ladite première station d'extrémité et un second port (108) dans une communication de paquet avec ladite deuxième station d'extrémité ; **caractérisé par** :
un point de contrôle d'entreprise centralisé déterminant une capacité de ladite voie en fonction d'un registre des éléments de réseau (210) qui liste les capacités de bande passante des éléments dans ledit réseau (100) comprenant lesdites première et deuxième stations d'extrémité (104, 106), ledit commutateur (102, 114, 120), et lesdits premier et second ports (108) ;
le refus de ladite connexion réservée si ladite capacité est inférieure à ladite bande passante requise ; et,
le fait d'amener ledit au moins un commutateur (102, 114, 120) à transmettre des paquets appartenant à ladite connexion réservée entre lesdits premier et second ports (108) le long de ladite voie avec une priorité supérieure à celle des paquets n'appartenant pas à ladite connexion réservée.

16. Procédé selon la revendication 15, ledit procédé établissant en outre une seconde connexion réservée entre des troisième et quatrième stations d'extrémité (104, 106) dans ledit réseau (100), ladite seconde connexion réservée ayant une seconde bande passante requise, au moins une parmi lesdites troisième et quatrième stations d'extrémité (104, 106) étant dans une communication de paquet avec un port commun parmi lesdits premier et second ports (108) dudit au moins un commutateur (102, 114, 120), une seconde voie entre lesdites troisième et quatrième stations d'extrémité (104, 106) comprenant ledit au moins un commutateur (102, 114, 120), ledit procédé comprenant :
l'identification de ladite seconde voie ;
la détermination d'une seconde capacité de ladite seconde voie ;
la réduction de ladite seconde capacité en fonction de ladite bande passante requise de ladite connexion réservée ; et
le refus de ladite seconde connexion réservée si ladite seconde capacité réduite est inférieure à ladite seconde bande passante requise.

17. Procédé selon la revendication 15, comprenant :
la réduction de ladite capacité en fonction des règles établies pour ledit réseau (100).

18. Procédé selon l'une quelconque des revendications 15 à 17, comprenant :
la signalisation de messages concernant ladite connexion réservée auxdites première et deuxième stations d'extrémité (104, 106) et audit au moins un commutateur (102, 114, 120), lesdits messages comprenant un identifiant prédéterminé pour distinguer lesdits messages d'un autre trafic du réseau.

19. Procédé selon la revendication 18, comprenant :
la réception d'un message de demande de connexion depuis une parmi lesdites première et deuxième stations d'extrémité (104, 106), ladite étape d'identification de voie répondant audit message de demande de connexion ;
l'envoi d'un message de réservation audit au moins un commutateur (102, 114, 120) via ledit moyen de signalisation en fonction de ladite voie identifiée dans ladite étape d'identification de voie.

20. Procédé selon la revendication 15, comprenant :
la signalisation de messages concernant ladite connexion réservée auxdites première et deuxième stations d'extrémité (104, 106) et audit au moins un commutateur (102, 114, 120), lesdits messages comprenant un identifiant prédéterminé pour distinguer lesdits messages d'un autre trafic du réseau ;
la réception d'un message de demande de connexion depuis une parmi lesdites première et deuxième stations d'extrémité (104, 106), ladite étape d'identification de voie et ladite étape de détermination de capacité répondant audit message de demande de connexion ;
l'envoi d'un message de réservation audit au moins un commutateur en fonction de ladite voie identifiée dans ladite étape d'identification de voie ; et
l'envoi d'un message de connexion refusée à ladite une parmi lesdites première et deuxième stations d'extrémité répondant à ladite étape de refus de connexion.

21. Procédé selon l'une quelconque des revendications 15 à 20, comprenant :
la surveillance de ladite connexion réservée, ladite étape de surveillance comprenant un moyen pour enregistrer en permanence les détails concernant ladite connexion réservée.

22. Procédé selon la revendication 21, dans lequel lesdits détails comprennent un ou plusieurs parmi un identifiant de station d'extrémité d'une ou des deux desdites première et deuxième stations d'extrémité (104, 106), un identifiant de commutateur dudit au moins un commutateur (102, 114, 120), une bande passante de ladite connexion réservée, et un temps écoulé de ladite connexion réservée.

23. Procédé selon l'une quelconque des revendications 15 à 22, comprenant :
la détermination pour savoir si les paquets entrants sur ledit au moins un commutateur (102, 114, 120) appartiennent à ladite connexion réservée ; et
la transmission desdits paquets entrants entre lesdits premier et second ports (108) dudit au moins un commutateur (102, 114, 120) en fonction de ladite détermination.

24. Procédé selon la revendication 23, comprenant :
l'abandon desdits paquets entrants qui n'appartiennent pas à ladite connexion réservée en fonction de ladite détermination.

25. Procédé selon l'une quelconque des revendications 15 à 24, comprenant :
la surveillance d'une bande passante réelle utilisée par ladite connexion réservée.

26. Procédé selon la revendication 25, comprenant :
l'autorisation donnée aux paquets n'appartenant pas à ladite connexion réservée d'être transmis entre lesdits premier et second ports (108) dudit au moins un commutateur (102, 114, 120) si ladite bande passante réelle est inférieure à une capacité de bande passante associée auxdits premier et second ports (108) par une marge prédéterminée.

27. Procédé selon la revendication 25, comprenant :
la détection pour savoir si ladite bande passante réelle est supérieure à une bande passante réservée de ladite connexion réservée, ladite étape consistant à transmettre des paquets appartenant à ladite connexion réservée entre lesdits premier et second ports (108) dudit au moins un commutateur étant réalisée en fonction, en outre, de ladite détection.
